# EUROPEAN PATENT SPECIFICATION

(11) **EP 2 651 236 B1**
(45) Date of publication and mention of the grant of the patent: **20.08.2014**
(21) Application number: 11788422.1
(22) Date of filing: 21.11.2011
(51) Int. Cl.: A23F 3/06, A23F 3/16, A23F 3/20

(54) **PROCESS FOR MANUFACTURING A TEA PRODUCT**
VERFAHREN ZUR HERSTELLUNG EINES TEEPRODUKTS
PROCÉDÉ POUR LA FABRICATION D'UN PRODUIT DE THÉ

(30) Priority: 16.12.2010 IN MU34282010; 08.02.2011 EP 11153642
(43) Date of publication of application: 23.10.2013
(73) Proprietor: Unilever N.V., 3013 AL Rotterdam (NL); Unilever PLC, London, Greater London EC4Y 0DY (GB)
(72) Inventor: MUKHOPADHYAY, Reshmee, Whitefield Bangalore 560 066 (IN); NAGARAJAN, Kalaivanan, Whitefield Bangalore 560 066 (IN); NARAYANAN, Venkatraj, Venkatrao, Whitefield Bangalore 560 066 (IN); PRAMANIK, Amitava, Whitefield Bangalore 560 066 (IN); SINGH, Gurmeet, Whitefield Bangalore 560 066 (IN)
(74) Representative: Askew, Sarah Elizabeth
(86) International application number: PCT/EP2011/070556
(87) International publication number: WO 2012/079916

(56) References cited:
- WO-A1-2009/059924
- US-A- 6 056 989
- US-B1- 6 348 224

## Description

### TECHNICAL FIELD

The present invention relates to a process for manufacturing a tea product. More particularly the present invention relates to a process for the preparation of a tea juice.

### BACKGROUND AND PRIOR ART

It is known to obtain tea juice by expressing juice from fresh tea leaves.

Tea juice obtained by expressing juice from fresh tea leaves has been disclosed in WO2009059924 A1 (Unilever).

CN101225082A (UNIV ZHEJIANG TECHNOLOGY, 2008) discloses a method of extracting tea polyphenol and separating monomer EGCG from tea, which is characterized in that: tea and solid phase alkali are mixed according to mass ratio of 1:0.1 to 2, ground jointly and mixed evenly before dissolving in water, stirred and centrifuged; inorganic acid is added into the supernatant to regulate pH value into 1.0 to 8.0, thereby getting sedimentation and filtering; filter residue is monomer EGCG; the filtrate is tea polyphenol solution which is then dried to get crude product of tea polyphenol.

US6348224B (Lipton, 2000) discloses a method for manufacturing black leaf tea. The method involves macerating freshly plucked tea leaves, treating the leaves with ammonium bicarbonate, fermenting the treated leaves, firing the leaves to arrest fermentation and then drying them to yield black leaf tea.

The present inventors have identified that the tea juice expressed from tea leaves can have a relatively high aluminium content. One of the problems addressed by the present invention is to reduce the aluminium content of the tea juice. A further problem is to reduce the aluminium content in the juice without degrading and/or decolorizing of the juice.

The present inventors have surprisingly found that addition of an alkaline agent to the leaf prior to expressing the juice leads to a reduction in the aluminium content of the juice. Furthermore, specific selection of alkaline agents allows a reduction in the aluminium content without discoloration of the juice.

### DEFINITIONS

### Tea

"Tea" for the purposes of the present invention means material from *Camellia sinensis* var. *sinensis* and/or *Camellia sinensis* var. *assamica.* Especially preferred is material' from var. *assamica* as this has a higher level of tea actives than var. *sinensis.*

"Leaf tea" for the purposes of this invention means a tea product that contains tea leaves and/or stem in an uninfused form, and that has been dried to a moisture content of less than 30% by weight, and usually has a water content in the range 1 to 10% by weight (i.e. "made tea").

"Green tea" refers to substantially unfermented tea. "Black tea" refers to substantially fermented tea. "Oolong tea" refers to partially fermented tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea leaves" refers to tea leaves, buds and/or stem that have never been dried to a water content of less than 30% by weight, and usually have a water content in the range 60 to 90%.

As used herein the term "expressing juice" refers to squeezing out juice from fresh tea leaves using physical force, as opposed to extraction of tea solids with the use of a solvent. Thus the term "expressing" encompasses such means as squeezing, pressing, wringing, spinning and extruding. It is possible that a small amount of solvent (e.g. water) is added to the fresh leaves during the expression step. However, in order to prevent significant extraction of tea solids by the solvent, the moisture content of the leaves during expression is that of fresh tea leaves as defined hereinabove. In other words, during the expression step, the moisture content of the tea leaves is between 30 and 90% by weight, more preferably between 60 and 90%. It is also preferred that the fresh leaves are not contacted with non-aqueous solvents (e.g. alcohols) prior to or during expression, owing to the environmental & economic problems associated with such solvents.

The term "tea solids" as used herein means the solids content of the tea juice determined by gravimetry. Preferably, a known mass (about 1 g of tea juice) is taken in a crucible, the crucible is placed in oven at 105 °C for 8 hours, and the residue in the crucible is weighed to determine tea solids. The tea solids are expressed as % by weight of the tea juice.

The term "water soluble tea solids" as used herein means the water extract of the tea solids, that is the soluble matter extracted from the tea solids according to ISO 9768:1994 (Tea: determination of water extract). The principle of the method specified is extraction of soluble matter from a test portion by boiling water under reflux, filtration, washing, drying and weighing of the hot-water-insoluble residue, and calculation of the water extract. The water soluble tea solids are expressed as % by weight of the tea solids.

### SUMMARY OF THE INVENTION

According to the present invention there is provided a process comprising expressing juice from fresh tea leaves thereby to produce leaf residue and tea juice, characterized in that an alkaline agent is added to the tea leaves at a mass ratio of 0.001:1 to 0.08:1 prior to or during the step of expressing the juice. Also provided tea juice and leaf residue obtained by the process of the invention.

### DETAILED DESCRIPTION

### Expression of Juice

The process comprises expressing juice from fresh tea leaves thereby to produce leaf residue and tea juice.

It is particularly preferred that the fresh tea leaves comprise material from var. *assamica* as this variety naturally has a high level of tea actives and so leads to a high level of actives in the leaf residue even after removal of the juice.

The amount of expressed juice is preferably at least 50 mL per kg of the fresh tea leaves. It is preferred that the amount of juice expressed in step (a) is less than 800 mL per kg of tea leaves, more preferably less than 700 mL and most preferably less than 600 ml. It is also preferred, however that the amount of expressed juice is at least 75 mL per kg of the fresh tea leaves, more preferably at least 100 mL and most preferably at least 150 ml. When referring to the volume of juice expressed per unit mass of tea leaves it should be noted that the mass of the tea leaves is expressed on an "as is" basis and not a dry weight basis. Thus the mass includes any moisture in the leaves.

The juice comprises preferably at least 4% by weight tea solids, more preferably at least 4.5% by weight tea solids and most preferably at least 5% by weight tea solids. There is no particular upper limit for the amount of tea solids in the tea juice and the tea juice may preferably comprise up to 30% by weight tea solids.

Water soluble tea solids are preferably 70-100% by weight of the tea solids, more preferably 80-100% by weight of the tea solids and most preferably 90-100% by weight of the tea solids.

The expression step may be achieved in any convenient way so long as it allows for separation of the tea juice from the leaf residue and results in the required quantity of juice. The machinery used to express the juice may, for example, include a hydraulic press, a pneumatic press, a screw press, a belt press, an extruder or a combination thereof. Alternatively, the juice and the leaf residue may separated by filtration or centrifugal separation.

The juice may be obtained from the fresh leaves in a single pressing or in multiple pressings of the fresh leaves. Preferably the juice is obtained from a single pressing as this allows for a simple and rapid process.

In order to minimise generation of off-flavours in the leaf tea and/or juice, it is preferred that the expression step is performed at ambient temperature. For example, the leaf temperature may be from 5- 40 °C, more preferably 10-30 °C.

The time and pressure used in the expression step can be varied to yield the specified amount of juice. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

Prior to expression, the fresh tea leaves may undergo a pre-treatment including, for example, a unit process selected from maceration, withering, fermentation or a combination thereof.

The fresh leaves may or may not be fermented prior to expression. If the leaves are fermented prior to expression then it is particularly preferred that they are macerated prior to fermentation.

Whether or not the fresh leaves are fermented, maceration prior to expression may help in decreasing the time and/or pressure required to express the specified quantity of juice.

Tea juice separated from the leaf residue typically has a high content of water-soluble tea solids and is a valuable raw material for producing tea products.

### Addition of alkaline agent

The process includes a step of adding an alkaline agent to the tea leaves at a mass ratio of 0.001:1 to 0.08:1 prior to or during the step of expressing the juice.

The mass ratio of the alkaline agent to the fresh tea leaves is preferably 0.002:1 to 0.05:1, more preferably from 0.004:1 to 0.04:1 and most preferably from 0.005:1 to 0.03:1. It is particularly preferred that the mass ratio of the alkaline agent to the fresh tea leaves is less than 0.02:1.

When the process includes a step of pretreatment of fresh tea leaves including withering, maceration, fermentation or any combination thereof, the mass ratio is based on the mass of the fresh tea leaves before any pretreatment.

The alkaline agent is preferably selected from (i) a hydroxide, carbonate or bicarbonate of an alkali metal (preferably sodium or potassium, more preferably sodium), an alkaline earth metal or ammonium, (ii) a monobasic or dibasic phosphate of an alkali metal, or a mixture thereof. More preferably, the alkaline agent is a monobasic or dibasic phosphate of an alkali metal. It is particularly preferred that the alkaline agent is disodium hydrogen phosphate or monosodium dihydrogen phosphate.

The pH of the juice after the expression step is preferably greater than 5.8, more preferably greater than 5.9 and most preferably greater than 6.

### Addition of acidulant

The process preferably comprises a further step of reducing the pH of the juice to less than 5.5. Preferably the pH is reduced to less than 5.2, more preferably less than 5. Preferably the pH of the juice is reduced to greater than 1, more preferably greater than 2 and most preferably greater than 3. An acidulant is preferably added to the juice for reducing the pH. The acidulant is preferably added after the step of expression of the juice.

Any organic or inorganic acid may be used as an acidulant. The acidulant is preferably selected from the group consisting of ascorbic acid, citric acid, and malic acid, or a mixture thereof. More preferably the acidulant is selected from citric acid or malic acid.

The amount of acidulant added to the juice is preferably chosen such that the resulting pH of the juice is in the range 1-5.5.

### Aluminium content of the tea juice

The aluminium content of the tea juice is preferably less than 1.8 mg/g of tea solids in the juice, more preferably less than 1.5 mg/g of tea solids in the juice, and most preferably less than 1.2 mg/g of tea solids in the juice.

### Processing the Juice

The tea juice obtained at the end of the process is a valuable raw material for producing tea products.

The juice may be used to produce a green tea product, an oolong tea product or a black tea product. In the case of an oolong tea product or a black tea product then the juice is preferably expressed from at least partially fermented leaf in step (a) and/or the juice is subjected to a fermentation step after expression. In the case of a green tea product, the fresh leaves are not fermented before expression and the juice is not fermented after expression. It is possible that the juice is unfermented (e.g. by treating to deactivate the enzymes immediately following expression) whilst the leaf residue is fermented to make black leaf tea or oolong leaf tea. Alternatively, the juice may be fermented following expression whilst the leaf residue is heat-treated to deactivate the fermentation enzymes and processed to a green leaf tea.

### Diluting to Make a Beverage

In one embodiment the tea juice is diluted to produce a beverage. A suitable process is described, for example, in CN 1 718 030 A (LANCANGJIANG BEER ENTPR GROUP).

The juice is preferably diluted with an aqueous medium, preferably water. The beverage typically comprises at least 85% water, more preferably at least 90%, optimally between 95 and 99.9% by weight of the beverage.

Because the juice is relatively rich in tea solids, it can be diluted many-fold whilst still imparting tea-qualities to the resulting beverage. Preferably, therefore, the juice is diluted by at least a factor of 2 to produce the beverage (i.e. 1 part of juice is combined with 1 part diluent by weight). More preferably the juice is diluted by a factor of at least 5 (i.e. 1 part of juice is combined with 4 parts diluent by weight) and most preferably by a factor of at least 7.

The juice can be used to make concentrated beverages with high levels of tea solids. For example, the juice may be diluted by a factor of less than 50, more preferably less than 25 and most preferably less than 15.

The mass of a single serve of the beverage may be, for example, less than 600 g, more preferably less than 350 g, more preferably still less than 250 g and most preferably from 20 to 150 g.

The beverage preferably comprises at least one nutrient selected from carbohydrate, protein, fat, vitamins, minerals and mixtures thereof. The beverage may be low calorie (e.g. have an energy content of less than 100 kCal per 100 g of the beverage) or may have a high calorie content (e.g. have an energy content of more than 100 kCal per 100 g of the beverage, preferably between 150 and 1000 kCal). It is most preferred that the beverage is very low calorie such that a single serving has a total energy content of less than 5 kCal, more preferably still less than 1 kCal.

The beverage may also comprise any of salt, sweetener, flavours, colours, preservatives, antioxidants or a mixture thereof.

The beverage is preferably packaged. The package will typically be a bottle, can, carton or pouch.

The beverage is preferably sanitised e.g. by pasteurisation or sterilisation.

### Drying the Juice

In one embodiment the tea juice is dried to produce a liquid concentrate or powder. Preferably the juice is dried to a moisture content of less than 80% by weight, more preferably less than 50% by weight, more preferably still less than 30% by weight and most preferably less than 10% by weight. Any suitable drying process may be used including spray drying, freeze drying, oven drying, tray drying, vacuum drying or a combination thereof.

The concentrate or powder may, for example, be diluted or dissolved to produce a beverage, used as a food additive and/or used as a starting material for producing other tea-derived materials.

### Processing the Leaf Residue

The leaf residue may be processed to produce leaf tea and/or tea extract. The leaf tea and/or extract is of a quality comparable to that of conventional leaf teas or extracts even though it has been produced from leaf residue which has had the juice removed therefrom. Thus the leaf residue is processed separately from the tea juice. In particular the expressed tea juice is not contacted with the leaf residue during manufacture of the leaf tea and/or tea extract.

The leaf residue may be processed to produce green leaf tea, black leaf tea or oolong leaf tea. In the case of oolong leaf tea and black leaf tea, the leaf residue is fermented. The manufacturing processes of green leaf tea, black leaf tea and oolong leaf tea are well known and suitable processes are described, for example, in "Tea: Cultivation to Consumption", K.C. Willson and M.N. Clifford (Eds), 1st Edn, 1992, Chapman & Hall (London), Chapters 13 and 14.

A step common to manufacture of all leaf teas is a drying step. In the case of oolong and black leaf tea, the drying step usually also serves to deactivate the fermentation enzymes. Efficient drying requires high temperatures (in the range of 75 - 130°C) and so it is preferred that the process comprises drying the leaf residue at a temperature of at least 75°C, more preferably at least 90°C.

The invention will now be demonstrated with help of examples. The examples are for the purpose of illustration only and do not limit the scope of the invention in any manner.

### EXAMPLES

### Measurement methods

### Aluminium content

1 mL of liquid sample was pipetted out in a silica crucible and was kept in a furnace (500 °C) for 6 hours for complete ashing of the sample. After that 5 mL of nitric acid was added to the sample and the mixture was heated on a hot plate till the volume of the sample reduced to 2 mL. This was diluted to 25 mL in a volumetric flask using a solution of 3% nitric acid. 10 mL of this is taken for aluminium analysis. Aluminium was analyzed using ICP-AES (Inductively Coupled Plasma - Atomic Emission Spectroscopy) by choosing wavelength of 396.14 nm

### Total Theaflavin Content:

The tea juice was diluted (1:1) with stabilizing solution (10%v/v acetonitrile with 500ug/ml of EDTA and ascorbic acid). The diluted samples were used for analysis. The theaflavins were analysed by HPLC using an octadecylsilica (C18) column (Novapak ex. Waters, 3.9 mm i.d.x 150 mm) with detection at 380 nm, a column temperature of 40°C, an injection volume of 20 µL and a flow rate of 1 mL/min. The mobile phases for theaflavin analysis were 2% (v/v) acetic acid in water (mobile phase A) and acetonitirile (mobile phase B). A linear gradient from 8% B to 69% B over 50 min was used to separate the theaflavins following which the column was equilibrated with 8% buffer A for 5 min. Pure theaflavins were used as standards for quantification.

### Color measurement

The juice was diluted 10-fold by adding water for colour measurement. The colour of the diluted juice was measured using a SS5100A spectrophotometer using D65 illuminant from the xenon flash lamp. The parameter L indicates lightness (higher value indicating lighter colour) and the parameter a* indicates redness of the given sample (higher value indicating more redness of the sample).

### Total solids content measurement

A dry pan was taken and kept in a hot air oven for 2 hrs at a temperature of 110°C. The pan was then placed in a dessicator for weighing; the reading was noted down and the pan was put back in the dessicator immediately and then placed in the hot air oven. 2 g of leaf tea was taken in a paper cup. After that 100 mL of boiling water at 100°C was added to the tealeaf. The solution was stirred for 2 minutes. After 2 minutes the liquor was filtered using a Whatman 541 filter paper. The filtrate was collected in a beaker and the volume was made up to 100 ml with deionised water. Then the 100ml of hot tea liquor was put in the weighed pans and placed on a water bath maintained at a ~100°C for evaporation. After complete evaporation the pan was wiped with a clean cloth to remove any remaining water from the bottom and kept in a hot air oven for drying for 12 hrs at 110°C. The final weight of the pan was taken and subtracted from the initial weight to obtain the amount of soluble solids in the tea.

### Examples 1-5

Examples 1-5 were carried out using the same batch of fresh tea leaves from a south Indian tea garden. All chemicals were from Sigma Aldrich having a purity of 99.99%.

### Example 1: Control

Fresh tea leaves were withered at 25 °C in the open for 18 hours to bring the moisture of the leaves to 75-80%. The tea leaves were subjected to CTC (cut tear curl) for 4 times to obtain macerated dhool. The macerated dhool was fermented (by exposure to air at 25 °C) for 75 minutes. 50 mL of juice was squeezed out from the fermented dhool (200 g) by a pneumatic press operating at a pressure of 6 kg/cm². The juice was centrifuged at 3600 rpm in a REMI centrifugation machine, to separate supernatant and residue. The supernatant was then analyzed for aluminum and soluble solids.

### Examples 2, 2A, 2B and 2C: Disodium Hydrogen Phosphate

Example 2 was carried out in the same manner as Example 1 except that disodium hydrogen phosphate (3% by weight of the dhool on dry weight basis) was added to 200g of fermented dhool after 60 minutes of fermentation. After a further 15 minutes of fermentation in presence of disodium hydrogen phosphate, about 50 mL of juice was squeezed out from the dhool by a pneumatic press operating at a pressure of 6 kg/cm². The juice was centrifuged at 3600 rpm in a REMI centrifugation machine, to separate supernatant and residue. The supernatant was then analyzed for aluminum and soluble solids.

Example 2A was the same as Example 2 in all respects except that 65mg citric acid was added to the supernatant obtained from centrifugation in order to reduce the pH to about 5.01. Examples 2B and 2C were similar in all respects to Example 2A except that the mass ratio of disodium hydrogen phosphate to the fresh tea leaves was changed (i.e. disodium hydrogen phosphate was added at 6% and 9% by weight of the dhool on dry basis, respectively).

### Examples 3 and 3A: Sodium bicarbonate

The process for example 3 was the same as Example 2 in all respects except that sodium bicarbonate (3% by weight of the dhool on dry weight basis) was used instead of disodium hydrogen phosphate. Example 3A was similar to Example 3 in all respects except that citric acid was added to reduce the pH to 4.78.

### Example 4 and 4A: Calcium hydroxide

The process for Example 4 was of the same as Example 2 in all respects except that calcium hydroxide (3% of the dhool on a dry weight basis) was used instead of disodium hydrogen phosphate. Example 4A was similar to Example 4 in all respects except that citric acid was added to reduce the pH to 4.8.

### Example 5

The process was the same as for Example 1, except that before the centrifugation step, 1.5 g of disodium hydrogen phosphate was added to 50 mL of tea juice (maintaining a similar mass ratio of alkaline agent to the tea leaves) and stirred for 30 minutes.

**Table 1: Examples 1-5**

| Ex No | Alkaline agent | Mass ratio | Acid | pH | Al* | Tea (wt%) | solids | TF* | L | a* |
|---|---|---|---|---|---|---|---|---|---|---|
| 1 | - | 0 | - | 5.01 | 2.00 | 4.8 | | 6.22 | 21.244 | 1.15 |
| 2 | DHP | 0.008 | - | 5.98 | 1.05 | 5.7 | | 4.27 | 20.95 | 0.54 |
| 2A | DHP | 0.008 | CA | 4.8 | 1.05 | 5.7 | | 4.83 | 21.15 | 1.03 |
| 2B | DHP | 0.017 | CA | 5.1 | 0.98 | 5.6 | | 3.93 | NM | NM |
| 2C | DHP | 0.025 | CA | 4.9 | 0.90 | 5.8 | | 2.41 | NM | NM |
| 3 | SBC | 0.008 | - | 6.67 | 1.03 | 5.6 | | 3.86 | 20.44 | -0.05 |
| 3A | SBC | 0.008 | CA | 4.78 | 1.00 | 5.7 | | 4.30 | 20.87 | 0.22 |
| 4 | CH | 0.008 | - | 7.01 | 0.76 | 4.3 | | 0.97 | 20.75 | 0.24 |
| 4A | CH | 0.008 | CA | 4.8 | 0.77 | 4.3 | | 1.19 | 21.27 | 0.86 |
| 5 | DHP | 0.008 | - | 6.6 | 2 | 4.8 | | 4.32 | 20.98 | 0.44 |

| | | | | | | | | | | |
|---|---|---|---|---|---|---|---|---|---|---|
| AI* and TF* - contents are expressed as mg/g tea solids in the juice. DHP = Disodium hydrogen phosphate SBC - Sodium bicarbonate CH - Calcium hydroxide CA- Citric Acid NM - Not measured | | | | | | | | | | |

It can be seen that the addition of an alkaline salt reduces the Al content of the expressed juice. Treatment with the alkaline agent results in some decrease in the theaflavin content and red colour of the juice. Further treatment with citric acid improves the theaflavin content and colour. Amongst the alkaline agents, DHP and SBC provide a reduction in Al content whilst reducing the loss of theaflavins. From Example 5, it can be seen that the addition of an alkaline agent after expressing the juice does not have any effect on the aluminium content. From Examples 2A-2C, it can be seen that lower values of the mass ratio of the alkaline agent to the fresh tea leaves helps in maintaining a higher theaflavin content.

### Examples 6 and 6A

These examples were carried out using another batch of fresh tea leaves from south Indian tea gardens. Example 6 was similar to Example 1 in all respects. Example 6A was similar to Example 2A in all respects except that malic acid was used instead of citric acid (86.7 mg added to 50 mL of the juice). The results are tabulated below.

**Table 2: Examples 6 and 6A**

| Ex No | Alkaline agent | Acid | pH | Al* | Tea (wt%) | solids | TF* | L** | a** |
|---|---|---|---|---|---|---|---|---|---|
| 6 | - | - | 5.15 | 1.0257 | 6.6 | | 6.06 | 21.31 | 1.18 |
| 6A | DHP | Malic acid | 5.07 | 0.586 | 8.19 | | 4.51 | 21.20 | 0.964 |

From the results, it can be seen that alkaline treatment followed by malic acid treatment also provides a reduction in aluminium content whilst retaining most of the theaflavin content.

The leaf residues from Examples 1 (control) and 2 (according to the invention) were taken after the juice had been expressed and then dried in a tray dryer at a temperature of about 90°C. Infusions were made using these leaf residue products.

The infusion was made by adding 100 mL of water at 100°C onto 2 g of leaf residue product, followed by stirring. After 2 minutes the resulting infusions were measured for colour and total soluble solids (TSS). The results of which are summarized in Table 3.

**Table 3**

| Example | L* | a* | b* | SS (g/100mL) | pH |
|---|---|---|---|---|---|
| 1 | 64.22 | 29.37 | 95.39 | 0.352 | 4.28 |
| 2 | 51.5 | 37.67 | 84.15 | 0.418 | 4.6 |

From Table 3 it is evident that the leaf residue product of example 2 has much better appearance (much higher a* value) than example 1 (the control). Furthermore the total soluble solids of example 2 is higher than that of the control.

## Claims

1. A process comprising expressing juice from fresh tea leaves thereby to produce leaf residue and tea juice, **characterized in that** an alkaline agent is added to the tea leaves at a mass ratio of the alkaline agent to the fresh tea leaves of 0.001:1 to 0.08:1 prior to or during the step of expressing the juice.

2. A process as claimed in claim 1 which comprises a further step of reducing the pH of the expressed juice to less than 5.5

3. A process as claimed in claim 2 wherein the pH of the expressed juice is reduced by the addition of an acidulant to the juice.

4. A process as claimed in claim 3 wherein the acidulant is selected from the group consisting of ascorbic acid, citric acid, and malic acid or a mixture thereof.

5. A process as claimed in any one of the preceding claims, wherein the alkaline agent is selected from (i) a hydroxide, carbonate or bicarbonate of an alkali metal, an alkaline earth metal or ammonium, (ii) monobasic or dibasic phosphate of an alkali metal, or a mixture thereof.

6. A process as claimed in any one of the preceding claims, wherein the alkaline agent is disodium hydrogen phosphate or monosodium dihydrogen phosphate.

7. A process as claimed in any one of the preceding claims wherein the juice comprises at least 4% by weight tea solids.

8. A process as claimed in any one of the preceding claims wherein aluminium content of the tea juice is less than 1.8 mg/g of tea solids in the juice.

9. A process as claimed in any one of the preceding claims wherein the fresh tea leaves comprises material from *Camellia sinensis* var. *assamica.*

10. A process as claimed in any one of the preceding claims wherein the amount of expressed juice is from 50 mL to 800 mL per kg of fresh tea leaves.

11. A process as claimed in any one of the preceding claims wherein the amount of expressed juice is at least 75 mL per kg of the fresh tea leaves, preferably at least 100 ml.

12. A process as claimed in any one of the preceding claims wherein the moisture content of the fresh tea leaves from which juice is expressed is from 60 to 90% by weight of the fresh tea leaves.

13. A process as claimed in any one of the preceding claims which further comprises drying the leaf residue at a temperature of from 75 - 130°C.

14. An expressed tea juice obtained by the process of any one of the preceding claims.

15. A leaf residue product obtained by the process of any one of claims 1-13.

## Patentansprüche

1. Verfahren, das das Auspressen von Saft aus frischen Teeblättern aufweist, wodurch ein Blattrückstand und Teesaft erzeugt wird,
**dadurch gekennzeichnet, dass** den Teeblättern vor oder während des Schrittes zum Auspressen des Saftes ein alkalisches Mittel in einem Massenverhältnis von alkalischem Mittel zu frischen Teeblättern von 0,001:1 bis 0,08:1 zugesetzt wird.

2. Verfahren nach Anspruch 1,
das einen weiteren Schritt aufweist, bei dem der pH-Wert des ausgepressten Saftes auf weniger als 5,5 verringert wird.

3. Verfahren nach Anspruch 2,
wobei der pH-Wert des ausgepressten Saftes verringert wird, indem dem Saft ein Säuerungsmittel zugesetzt wird.

4. Verfahren nach Anspruch 3,
wobei das Säuerungsmittel aus der Gruppe ausgewählt ist, die aus Ascorbinsäure, Citronensäure und Äpfelsäure oder einem Gemisch davon besteht.

5. Verfahren nach einem der vorstehenden Ansprüche,
wobei das alkalische Mittel ausgewählt ist aus (i) einem Hydroxid, Carbonat oder Bicarbonat von einem Alkalimetall, einem Erdalkalimetall oder Ammonium, (ii) einem monobasischen oder dibasischen Phosphat eines Alkalimetalls, oder einem Gemisch davon.

6. Verfahren nach einem der vorstehenden Ansprüche,
wobei das alkalische Mittel Dinatriumhydrogenphosphat oder Mononatriumdihydrogenphosphat ist.

7. Verfahren nach einem der vorstehenden Ansprüche,
wobei der Saft mindestens 4 Gew.-% Teefeststoffe aufweist.

8. Verfahren nach einem der vorstehenden Ansprüche,
wobei der Aluminiumgehalt des Teesaftes weniger als 1,8 mg/g der Teefeststoffe im Saft beträgt.

9. Verfahren nach einem der vorstehenden Ansprüche,
wobei die frischen Teeblätter Material von Camellia sinensis var. assamica aufweisen.

10. Verfahren nach einem der vorstehenden Ansprüche,
wobei die Menge des ausgepressten Saftes 50 bis 800 ml pro kg der frischen Teeblätter beträgt.

11. Verfahren nach einem der vorstehenden Ansprüche,
wobei die Menge des ausgepressten Saftes mindestens 75 ml, vorzugsweise mindestens 100 ml pro kg der frischen Teeblätter beträgt.

12. Verfahren nach einem der vorstehenden Ansprüche,
wobei der Feuchtigkeitsgehalt der frischen Teeblätter, aus denen der Saft ausgepresst wird, 60 bis 90 Gew.-% der frischen Teeblätter beträgt.

13. Verfahren nach einem der vorstehenden Ansprüche,
das ferner das Trocknen der Blattrückstände bei einer Temperatur von 75 bis 130 °C aufweist.

14. Ausgepresster Teesaft,
der nach einem Verfahren nach einem der vorstehenden Ansprüche erhalten wird.

15. Blattrückstandsprodukt,
das nach dem Verfahren nach einem der Ansprüche 1 bis 13 erhalten wird.

## Revendications

1. Procédé comprenant l'expression de jus à partir de feuilles de thé fraiches pour produire par là un résidu de feuilles et un jus de thé, **caractérisé en ce qu'**un agent alcalin est ajouté aux feuilles de thé à un rapport massique de l'agent alcalin aux feuilles de thé fraiches de 0,001:1 à 0,08:1 avant ou pendant l'étape d'expression du jus.

2. Procédé selon la revendication 1, lequel comprend une étape supplémentaire de réduction du pH du jus exprimé à moins de 5,5.

3. Procédé selon la revendication 2, dans lequel le pH du jus exprimé est réduit par l'addition d'un acidulant au jus.

4. Procédé selon la revendication 3, dans lequel l'acidulant est choisi dans le groupe constitué d'acide ascorbique, d'acide citrique, et d'acide malique ou d'un mélange de ceux-ci.

5. Procédé selon l'une quelconque des revendications précédentes, dans lequel l'agent alcalin est choisi parmi (i) un hydroxyde, un carbonate ou un bicarbonate d'un métal alcalin, un métal alcalino-terreux ou l'ammonium, (ii) un phosphate monobasique ou dibasique d'un métal alcalin, ou un mélange de ceux-ci.

6. Procédé selon l'une quelconque des revendications précédentes, dans lequel l'agent alcalin est l'hydrogénophosphate de disodium ou le dihydrogénophosphate de monosodium.

7. Procédé selon l'une quelconque des revendications précédentes, dans lequel le jus comprend au moins 4 % en masse de matières solides de thé.

8. Procédé selon l'une quelconque des revendications précédentes, dans lequel la teneur en aluminium du jus de thé est inférieure à 1,8 mg/g de matières solides de thé dans le jus.

9. Procédé selon l'une quelconque des revendications précédentes, dans lequel les feuilles de thé fraiches comprennent un matériau de *Camellia sinensis var. asssamica*.

10. Procédé selon l'une quelconque des revendications précédentes, dans lequel la quantité de jus exprimé est de 50 ml à 800 ml par kg de feuilles de thé fraiches.

11. Procédé selon l'une quelconque des revendications précédentes, dans lequel la quantité de jus exprimé est d'au moins 75 ml par kg des feuilles de thé fraiches, de préférence d'au moins 100 ml.

12. Procédé selon l'une quelconque des revendications précédentes, dans lequel la teneur en humidité des feuilles de thé fraiches à partir desquelles le jus est exprimé est de 60 à 90 % en masse des feuilles de thé fraiches.

13. Procédé selon l'une quelconque des revendications précédentes qui comprend de plus le séchage du résidu de feuilles à une température de 75 -130°C.

14. Jus de thé exprimé obtenu par le procédé selon l'une quelconque des revendications précédentes.

15. Produit de résidu de feuilles obtenu par le procédé selon l'une quelconque des revendications 1-13.
